# EUROPEAN PATENT APPLICATION

(11) **EP 4 671 857 A1**
(43) Date of publication of application: **31.12.2025**
(21) Application number: 24792314.7
(22) Date of filing: 26.01.2024
(51) Int. Cl.: G02F 1/1333, G02F 1/13

(54) **PHASE MODULATION MODULE**

(30) Priority: 21.04.2023 JP 2023069885; 20.07.2023 JP 2023118048
(71) Applicant: Hamamatsu Photonics K.K., Hamamatsu-shi, Shizuoka 435-8558 (JP)
(72) Inventor: NOZAWA Naoki, Hamamatsu-shi, Shizuoka 435-8558 (JP); ASAINE Hirokazu, Hamamatsu-shi, Shizuoka 435-8558 (JP); FUKUJIN Jumpei, Hamamatsu-shi, Shizuoka 435-8558 (JP); NAGATA Mikio, Hamamatsu-shi, Shizuoka 435-8558 (JP); TAKAHASHI Takumi, Hamamatsu-shi, Shizuoka 435-8558 (JP); AKIZAWA Yoshiki, Hamamatsu-shi, Shizuoka 435-8558 (JP); MURAMATSU Yuma, Hamamatsu-shi, Shizuoka 435-8558 (JP)
(74) Representative: Grünecker Patent- und Rechtsanwälte PartG mbB
(86) International application number: PCT/JP2024/002434
(87) International publication number: WO 2024/219038

(57) **Abstract**

A phase modulation module includes a base portion, a phase modulation element, a holding portion including a first side wall portion, a second side wall portion, and a top wall portion, and a filling material. The top wall portion includes a first extending portion and a second extending portion. End surfaces of the first extending portion and the second extending portion face the phase modulation element. The filling material is disposed in each of a first space formed by a first side surface, the first side wall portion, and the top wall portion of the phase modulation element, and a second space formed by a second side surface, the second side wall portion, and the top wall portion of the phase modulation element, and connects the phase modulation element and the holding portion to each other in the first space and connects the phase modulation element and the holding portion to each other in the second space.

## Description

### Technical Field

One aspect of the present disclosure relates to a phase modulation module.

### Background Art

An optical element package described in Patent Literature 1 includes a housing formed by a bottom plate and a side plate, and a reflection-type optical element accommodated in the housing. A gap between the optical element and the housing is filled with a sealing resin, and a side surface and a back surface of the optical element are covered with the sealing resin.

### Citation List

### Patent Literature

Patent Literature 1: Japanese Unexamined Patent Publication No. 2017-116735

### Summary of Invention

### Technical Problem

In the configuration as described above, it is difficult to adjust an application amount of a filling material (sealing resin), and the filling material may flow out to an effective region of the surface of the optical element during manufacturing, transportation, use, or the like. Therefore, improvement of controllability of the filling material is required. Furthermore, in a case where the optical element is a phase modulation element, for example, in a case where light having a large average light amount is modulated by the phase modulation element, there is a possibility that a change in characteristics or damage (for example, decomposition or carbonization of liquid crystal) associated with a temperature rise may occur due to an increase in a heat generation amount. In addition, when a temperature rises, a plane shape of the phase modulation element changes, and there is a possibility that distortion to an extent that cannot be corrected occurs in a phase pattern input to the phase modulation element. Therefore, improvement of heat dissipation (light resistance) is required.

Therefore, an object of one aspect of the present disclosure is to provide a phase modulation module capable of easily controlling a filling material and improving heat dissipation.

### Solution to Problem

A phase modulation module according to one aspect of the present disclosure is [1] "a phase modulation module including: a base portion; a reflection-type phase modulation element disposed on the base portion; a holding portion disposed on the base portion, the holding portion including a first side wall portion facing a first side surface of the phase modulation element, a second side wall portion facing a second side surface opposite to the first side surface of the phase modulation element, and a top wall portion connected to the first side wall portion and the second side wall portion, the top wall portion having an opening that overlaps at least a part of the phase modulation element when viewed from a predetermined direction; and a filling material disposed between the phase modulation element and the holding portion, in which when a side on which the phase modulation element is located with respect to the base portion in the predetermined direction is defined as a first side and a side opposite to the first side is defined as a second side, the phase modulation element includes: a circuit board disposed on the base portion, a liquid crystal layer disposed on the first side with respect to the circuit board, and a cover member formed of a light transmissive material in a plate shape and disposed on the first side with respect to the liquid crystal layer, the top wall portion includes a first extending portion extending from the first side wall portion toward the phase modulation element and a second extending portion extending from the second side wall portion toward the phase modulation element, and an end surface of the first extending portion and an end surface of the second extending portion face the phase modulation element, and the filling material is disposed in each of a first space formed by the first side surface of the phase modulation element and the first side wall portion and the top wall portion of the holding portion, and a second space formed by the second side surface of the phase modulation element and the second side wall portion and the top wall portion of the holding portion, and connects the phase modulation element and the holding portion to each other in the first space and connects the phase modulation element and the holding portion to each other in the second space".

In this phase modulation module, an arrangement space (the first space and the second space) of the filling material can be restricted by the holding portion having the top wall portion in addition to the first side wall portion and the second side wall portion, and an amount of the filling material can be reduced. In addition, since the top wall portion includes the first extending portion extending from the first side wall portion toward the phase modulation element and the second extending portion extending from the second side wall portion toward the phase modulation element, and the end surface of the first extending portion and the end surface of the second extending portion face the phase modulation element, the arrangement space of the filling material can be effectively restricted. The filling material is disposed in each of the first space and the second space, and connects the phase modulation element and the holding portion to each other in the first space and connects the phase modulation element and the holding portion to each other in the second space. As a result, heat generated in the phase modulation element can be efficiently transferred to the holding portion via a small amount of filling material, and the heat can be efficiently dissipated to the base portion via the holding portion. In addition, since heat is transferred to the holding portion on the first side surface side and the second side surface side of the phase modulation element, the heat can be efficiently dissipated in a well-balanced manner. On the other hand, when the arrangement space of the filling material is restricted by the holding portion, the filling material easily flows out to the surface of the phase modulation element (cover member) on the first side depending on the application amount of the filling material, and there is a possibility that it becomes difficult to control the filling material. In this regard, in this phase modulation module, the end surface of the first extending portion and the end surface of the second extending portion of the top wall portion face the phase modulation element. As a result, it is possible to suppress the filling material from flowing out to the effective region of the surface of the cover member, and it is possible to facilitate the control of the filling material (it is possible to widen an allowable range for the application amount of the filling material). Therefore, according to this phase modulation module, the filling material can be easily controlled, and heat dissipation can be improved.

The phase modulation module according to one aspect of the present disclosure may be [2] "the phase modulation module according to [1], in which a surface of the cover member on the first side is located on the first side with respect to a surface of the top wall portion on the first side". In this case, it is possible to further suppress the filling material from flowing out to the surface of the cover member. In addition, even when the filling material flows out to the surface of the cover member, the filling material can be easily wiped with, for example, a wiper or the like.

The phase modulation module according to one aspect of the present disclosure may be [3] "the phase modulation module according to [1] or [2], in which the base portion includes a heat sink". In this case, the heat dissipation of the base portion can be enhanced.

The phase modulation module according to one aspect of the present disclosure may be [4] "the phase modulation module according to any one of [1] to [3], in which the cover member is formed of sapphire or diamond, and the filling material is in contact with the cover member on the first side surface and the second side surface". In this case, a thermal conductivity of the cover member can be increased, and heat generated in the vicinity of a center of the liquid crystal layer can be efficiently transferred to a peripheral edge portion of the cover member. Then, the heat transferred to the peripheral edge portion of the cover member can be efficiently dissipated from the first side surface and the second side surface.

The phase modulation module according to one aspect of the present disclosure may be [5] "the phase modulation module according to any one of [1] to [4], in which the holding portion is configured to define a first opening facing a third side surface different from the first side surface and the second side surface in the phase modulation element". In this case, even when the application amount of the filling material increases, the filling material can be released to the first opening, and the filling material can be reliably suppressed from flowing out to the surface of the cover member.

The phase modulation module according to one aspect of the present disclosure may be [6] "the phase modulation module according to [5], in which the holding portion is configured to define a second opening facing a fourth side surface opposite to the third side surface of the phase modulation element". In this case, even when the application amount of the filling material increases, the filling material can be released to the second opening, and the filling material can be more reliably suppressed from flowing out to the surface of the cover member.

The phase modulation module according to one aspect of the present disclosure may be [7] "the phase modulation module according to any one of [1] to [6], further including a wiring substrate disposed on the base portion such that at least a part of the wiring substrate is located between the first side wall portion and the second side wall portion when viewed from the predetermined direction, in which the circuit board is disposed on the base portion via the wiring substrate". In this case, for example, a fixing strength of the phase modulation element can be increased as compared with a case where the circuit board is directly disposed on the base portion.

The phase modulation module according to one aspect of the present disclosure may be [8] "the phase modulation module according to any one of [1] to [7], further including a wiring substrate disposed on the base portion such that at least a part of the wiring substrate is located between the first side wall portion and the second side wall portion when viewed from the predetermined direction, in which the holding portion is configured to define a first opening facing a third side surface different from the first side surface and the second side surface in the phase modulation element, and the circuit board and the wiring substrate are electrically connected to each other by a wire disposed in the first opening". In this case, even when the application amount of the filling material increases, the filling material can be released to the first opening, and the filling material can be suppressed from flowing out to the surface of the cover member. In addition, a space for disposing the wire can be secured by the first opening.

The phase modulation module according to one aspect of the present disclosure may be [9] "the phase modulation module according to any one of [1] to [8], in which the filling material connects the first side surface of the phase modulation element and the first side wall portion of the holding portion to each other in the first space, and connects the second side surface of the phase modulation element and the second side wall portion of the holding portion to each other in the second space". In this case, the heat generated in the phase modulation element can be efficiently transferred to the holding portion.

The phase modulation module according to one aspect of the present disclosure may be [10] "the phase modulation module according to any one of [1] to [9], in which a distance between the end surface of the first extending portion and the phase modulation element and a distance between the end surface of the second extending portion and the phase modulation element are smaller than a thickness of the cover member". In this case, it is possible to reliably suppress the filling material from flowing out to the surface of the cover member.

The phase modulation module according to one aspect of the present disclosure may be [11] "the phase modulation module according to any one of [1] to [10], in which the filling material is in contact with the top wall portion". In this case, the heat generated in the phase modulation element can be efficiently transferred to the holding portion. In addition, when an impact or the like acts on the top wall portion, the filling material functions as a cushion, such that the impact can be alleviated.

The phase modulation module according to one aspect of the present disclosure may be [12] "the phase modulation module according to any one of [1] to [11], in which the filling material is disposed between the end surface of the first extending portion and the phase modulation element and between the end surface of the second extending portion and the phase modulation element". In this case, the heat generated in the phase modulation element can be efficiently transferred to the holding portion.

The phase modulation module according to one aspect of the present disclosure may be [13] "the phase modulation module according to any one of [1] to [12], in which the first side wall portion, the second side wall portion, and the top wall portion are integrally formed". In this case, handling of the holding portion can be facilitated. In addition, a strength of the holding portion can be secured.

The phase modulation module according to one aspect of the present disclosure may be [14] "the phase modulation module according to any one of [1] to [13], further including a housing portion that includes a housing side wall portion surrounding the phase modulation element and the holding portion when viewed from the predetermined direction, and a housing top wall portion connected to the housing side wall portion, the housing portion being disposed on the base portion and accommodating the phase modulation element and the holding portion, in which a housing opening that overlaps at least a part of the phase modulation element when viewed from the predetermined direction is formed in the housing top wall portion". In this case, it is possible to suppress foreign matter or stray light from entering an arrangement portion of the phase modulation element and the holding portion.

The phase modulation module according to one aspect of the present disclosure may be [15] "the phase modulation module according to [14], in which an edge of the housing opening is located inside an outer edge of the cover member when viewed from the predetermined direction". In this case, it is possible to effectively suppress stray light from entering the housing portion from the housing opening.

The phase modulation module according to one aspect of the present disclosure may be [16] "the phase modulation module according to [14] or [15], in which the holding portion is in contact with an inner surface of the housing portion". In this case, the heat transferred from the phase modulation element to the holding portion can be dissipated to the housing portion, and the heat dissipation can be further improved.

The phase modulation module according to one aspect of the present disclosure may be [17] "the phase modulation module according to any one of [14] to [16], in which a surface of the cover member on the first side is in contact with the housing top wall portion". In this case, the heat generated in the phase modulation element can be dissipated to the housing portion via the cover member.

The phase modulation module according to one aspect of the present disclosure may be [18] "the phase modulation module according to any one of [1] to [17], further including a covering member provided on an exposed portion of the filling material that is exposed from the holding portion so as to cover the exposed portion". In this case, bleeding and occurrence of particles on the surface of the filling material can be suppressed.

The phase modulation module according to one aspect of the present disclosure may be [19] "the phase modulation module according to any one of [1] to [18], further including: a wiring substrate disposed on the base portion such that at least a part of the wiring substrate is located between the first side wall portion and the second side wall portion when viewed from the predetermined direction; and a temperature monitoring element disposed on the wiring substrate and configured to monitor a temperature of the phase modulation element, in which the temperature monitoring element is disposed so as to overlap the first side wall portion, the second side wall portion, or the top wall portion when viewed from the predetermined direction, and a recessed portion in which the temperature monitoring element is disposed is formed in the first side wall portion, the second side wall portion, or the top wall portion". In this case, the temperature monitoring element can be disposed near the phase modulation element while protecting the phase modulation element with the filling material.

The phase modulation module according to one aspect of the present disclosure may be [20] "the phase modulation module according to any one of [1] to [19], further including a wiring substrate disposed on the base portion such that at least a part of the wiring substrate is located between the first side wall portion and the second side wall portion when viewed from the predetermined direction, in which an electrode layer is formed on a surface of the cover member on the second side, the cover member has a protruding portion protruding from the circuit board when viewed from a Z direction, and the electrode layer on the protruding portion and the wiring substrate are electrically connected to each other by a wire". In this case, the wire can be stably connected to the electrode layer.

The phase modulation module according to one aspect of the present disclosure may be [21] "the phase modulation module according to [20], in which a recessed portion in which the wire is disposed is formed in the first side wall portion, the second side wall portion, or the top wall portion". In this case, the wire can be suitably disposed while restricting the arrangement space of the filling material by the holding portion.

The phase modulation module according to one aspect of the present disclosure may be [22] "the phase modulation module according to [20] or [21], in which a connection member having a predetermined height in the predetermined direction is disposed on the wiring substrate, an electrode pad electrically connected to the wiring substrate is formed on the connection member, and the wire is electrically connected to the electrode pad". In this case, since the wire is electrically connected to the electrode pad on the connection member having the predetermined height, it is possible to suppress the wire from being excessively curved in the predetermined direction and to reduce a load applied to the wire.

### Advantageous Effects of Invention

According to one aspect of the present disclosure, it is possible to provide a phase modulation module capable of easily controlling a filling material and improving heat dissipation.

### Brief Description of Drawings

FIG. 1 is a perspective view of a phase modulation module according to an embodiment.
FIG. 2 is a perspective view in which a housing portion is removed from FIG. 1.
FIG. 3 is a cross-sectional view taken along line III-III of FIG. 1.
FIG. 4 is a cross-sectional view taken along line IV-IV of FIG. 1.
FIG. 5(a) is a plan view of a wiring substrate and a phase modulation element, and FIG. 5(b) is a side view of the wiring substrate and the phase modulation element.
FIG. 6(a) is a side view of the holding portion as viewed from an upper side in FIG. 6(b), FIG. 6(b) is a bottom view of the holding portion, and FIG. 6(c) is a side view of the holding portion as viewed from a lower side in FIG. 6(b).
FIG. 7 is a cross-sectional view of a phase modulation module of a first modification.
FIG. 8 is a cross-sectional view of a phase modulation module of a second modification.
FIG. 9 is a cross-sectional view of a phase modulation module of a third modification.
FIG. 10 is a cross-sectional view of a phase modulation module of a fourth modification.
FIG. 11 is a cross-sectional view of a phase modulation module of a fifth modification.
FIG. 12 is a perspective view of a phase modulation module of a sixth modification.
FIG. 13 is a cross-sectional view taken along line XIII-XIII of FIG. 12.
FIG. 14 is a cross-sectional view taken along line XIV-XIV of FIG. 12.

### Description of Embodiments

Hereinafter, an embodiment of the present disclosure will be described in detail with reference to the drawings. The following description will use the same reference numerals for the same or equivalent elements, and repeated descriptions will be omitted.

### [Phase Modulation Module]

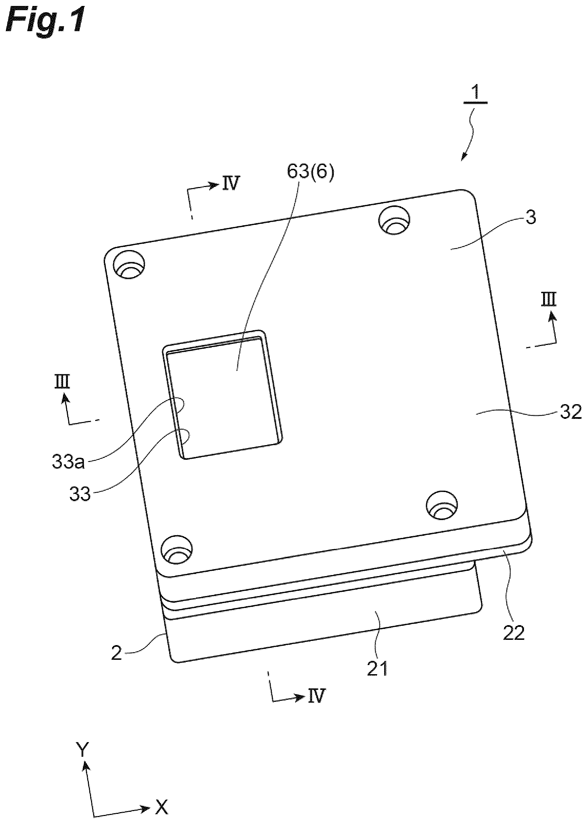

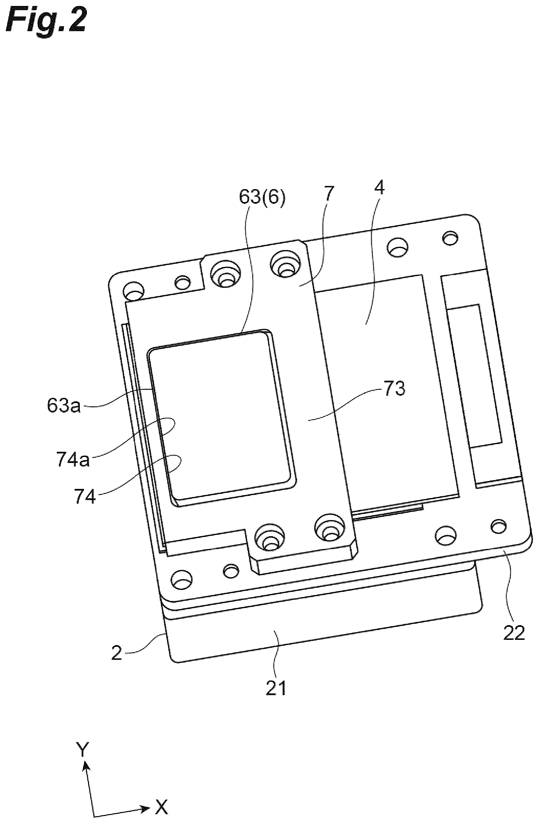

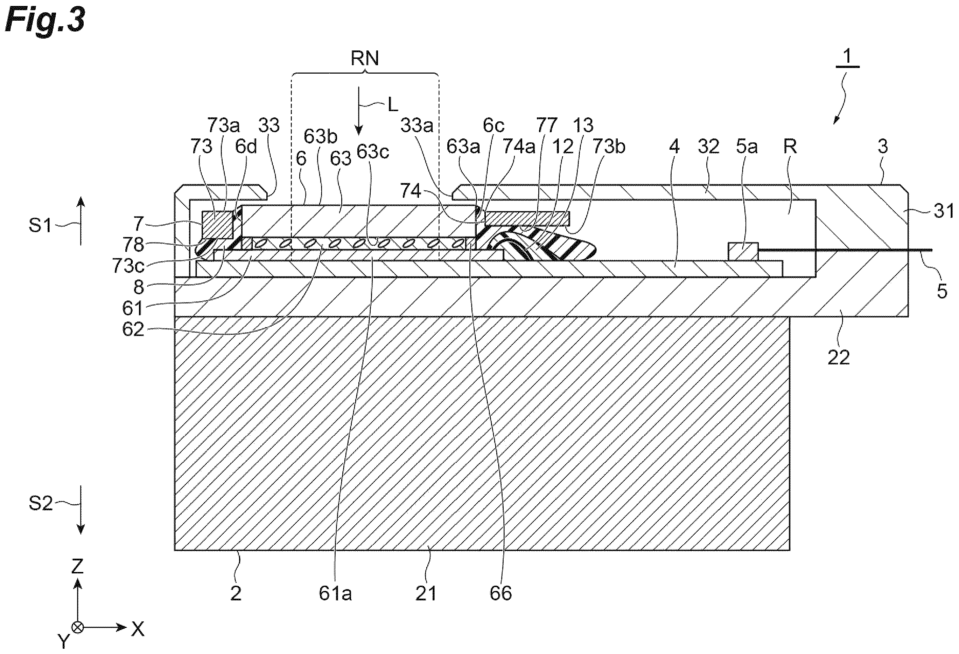

As illustrated in FIGS. 1 to 6, the phase modulation module 1 includes a base portion 2, a housing portion 3 (outer cover), a first wiring substrate 4, a second wiring substrate 5, a phase modulation element 6, a holding portion 7 (inner cover), and a filling material 8. The phase modulation element 6 includes a circuit board 61, a liquid crystal layer 62, and a cover member 63. In the phase modulation module 1, laser light L is incident on the phase modulation element 6 and reflected. At this time, a phase of the laser light L is modulated by the liquid crystal layer 62. Hereinafter, a description will be given with reference to an X direction, a Y direction (direction perpendicular to the X direction), and a Z direction (direction perpendicular to the X direction and the Y direction) (predetermined direction) illustrated in each drawing. A side (upper side in FIG. 3) on which the phase modulation element 6 is located with respect to the base portion 2 in the Z direction is defined as a first side S1, and a side (lower side in FIG. 3) opposite to the first side S1 is defined as a second side S2. In FIGS. 1, 2, and 12, the second wiring substrate 5 and the like are omitted.

The base portion 2 includes a heat sink 21 and a base wall portion 22. The heat sink 21 is a heat dissipation member formed of, for example, a metal material in a rectangular parallelepiped shape. In this example, the heat sink 21 is of a water-cooling type, and is cooled by causing a coolant to flow in a flow path formed inside. As an example, the temperature of the heat sink 21 during use is about 25°C. A thickness of the heat sink 21 in the Z direction is larger than a thickness of the phase modulation element 6 in the Z direction.

The base wall portion 22 is formed of a metal material such as aluminum in a substantially rectangular plate shape. The base wall portion 22 is disposed on the heat sink 21 and is located on the first side S1 with respect to the heat sink 21. In this example, a portion of the base wall portion 22 on one side in the X direction (left side in FIG. 3) is in contact with the heat sink 21, and a portion of the base wall portion 22 on the other side in the X direction is not in contact with the heat sink 21. In the Y direction, the entire base wall portion 22 is in contact with the heat sink 21.

The housing portion 3 is formed of, for example, a metal material such as aluminum. The housing portion 3 includes a side wall portion 31 (housing side wall portion) and a top wall portion 32 (housing top wall portion). The side wall portion 31 is formed in a rectangular frame shape in plan view (when viewed from the Z direction). The side wall portion 31 is disposed on the base wall portion 22 and surrounds the phase modulation element 6 and the holding portion 7 in plan view. An opening for drawing out the second wiring substrate 5 to the outside of the housing portion 3 is formed in the side wall portion 31.

The top wall portion 32 is connected to the side wall portion 31 and is formed in a rectangular plate shape. The top wall portion 32 faces the base wall portion 22 in the Z direction. The top wall portion 32 and the base wall portion 22 extend parallel to each other and perpendicular to the Z direction. In this example, an accommodation space R for accommodating the phase modulation element 6 and the holding portion 7 is defined by the base wall portion 22, the side wall portion 31, and the top wall portion 32.

An opening 33 (housing opening) through which the laser light L incident on the phase modulation element 6 and the laser light L reflected by the phase modulation element 6 pass is formed in the top wall portion 32. The opening 33 has a rectangular shape elongated in the Y direction. The opening 33 overlaps a part on a central side of the phase modulation element 6 in plan view. In this example, in plan view, an edge 33a of the opening 33 is located inside an outer edge 63a of the cover member 63. An inner surface (edge 33a) of the opening 33 has an inclined surface inclined (inclined in a tapered shape) with respect to the Z direction so as to face the central side of the phase modulation element 6 as it faces the second side S2. A thickness of at least a part (all in this example) of the top wall portion 32 in the Z direction is thinner than a thickness of the base wall portion 22 and a thickness of the phase modulation element 6 in the Z direction.

The first wiring substrate 4 is a rectangular plate-shaped ceramic substrate formed of, for example, ceramic (aluminum nitride), and is disposed in the accommodation space R. The first wiring substrate 4 is directly disposed on the base wall portion 22. In this example, the entire first wiring substrate 4 is disposed inside the side wall portion 31 in plan view. A part of the first wiring substrate 4 is located between a first side wall portion 71 and a second side wall portion 72 of the holding portion 7 described later in plan view. The first wiring substrate 4 may be disposed such that the entire first wiring substrate 4 does not overlap the holding portion 7 in plan view (for example, inside the opening 33).

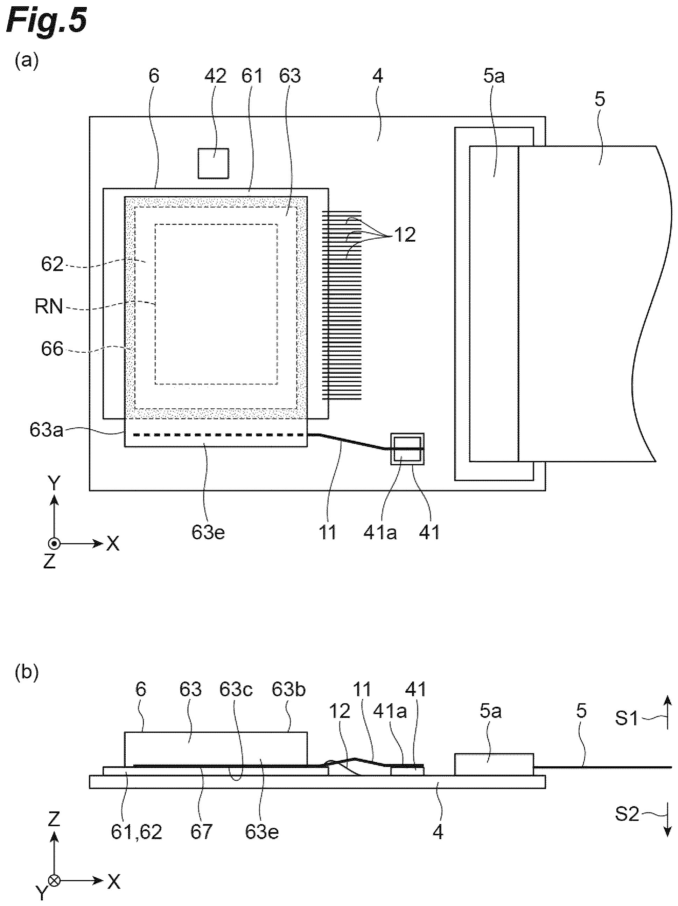

As illustrated in FIGS. 5(a) and 5(b), a predetermined wiring, an electronic component, and the like are provided on the first wiring substrate 4. For example, a connection member 41 is disposed on the first wiring substrate 4. The connection member 41 is formed in a substantially rectangular parallelepiped shape, for example, and has a predetermined height in the Z direction. The height of the connection member 41 is set to be substantially equal to a height of a surface 63c of the cover member 63 on a second side S2 described later. The height of the connection member 41 and the surface 63c of the cover member 63 is a height from the surface of the first wiring substrate 4. An electrode pad 41a electrically connected to the first wiring substrate 4 is formed on the connection member 41. A wire 11 for electrical connection with an electrode layer 67 described later is electrically connected to the electrode pad 41a. The connection member 41 is disposed so as to be located, for example, between the phase modulation element 6 and the second wiring substrate 5 in the X direction.

In addition, a temperature monitoring element 42 for monitoring (detecting) a temperature of the phase modulation element 6 is provided on the first wiring substrate 4. The temperature monitoring element 42 is, for example, a temperature sensor such as a thermistor. The temperature monitoring element 42 is disposed adjacent to (facing) the phase modulation element 6 in the Y direction, for example.

The second wiring substrate 5 is electrically connected to the first wiring substrate 4. The second wiring substrate 5 is, for example, a flexible circuit board having flexibility, and is electrically connected to the first wiring substrate 4 via a connection portion 5a. More specifically, the second wiring substrate 5 is connected to a portion of the first wiring substrate 4 on one side in the X direction (right side in FIG. 3) in the accommodation space R. A predetermined wiring, an electronic component, and the like may be provided on the second wiring substrate 5. For example, the second wiring substrate 5 is drawn out from the opening formed in the side wall portion 31 to the outside of the accommodation space R.

The phase modulation element 6 is disposed in the accommodation space R, and the entire phase modulation element 6 is located inside the side wall portion 31 in plan view. In this example, the phase modulation element 6 is disposed to be offset to the side opposite to the second wiring substrate 5 (the left side of the paper in FIG. 3) with respect to the center of the accommodation space R in the X direction. In the phase modulation element 6, the circuit board 61, the liquid crystal layer 62, and the cover member 63 are laminated in this order in the Z direction. That is, the liquid crystal layer 62 is formed on the circuit board 61, and the cover member 63 is formed on the liquid crystal layer 62. The phase modulation element 6 is a reflection-type spatial light modulator. In this example, the phase modulation element 6 is an LCOS-SLM (liquid crystal on silicon-spatial light modulator).

For example, the laser light L is incident on the phase modulation element 6 from the cover member 63 side along the Z direction (thickness direction of the phase modulation element 6). The laser light L incident from the cover member 63 is incident on the liquid crystal layer 62, and the phase of the laser light L is modulated when traveling in the liquid crystal layer 62. More specifically, an inclination of liquid crystal molecules in the liquid crystal layer 62 is controlled for each pixel by a voltage applied from the circuit board 61, and the phase of the laser light L incident on each pixel is controlled by changing a refractive index of the liquid crystal. The laser light L incident on the liquid crystal layer 62 is reflected by the circuit board 61.

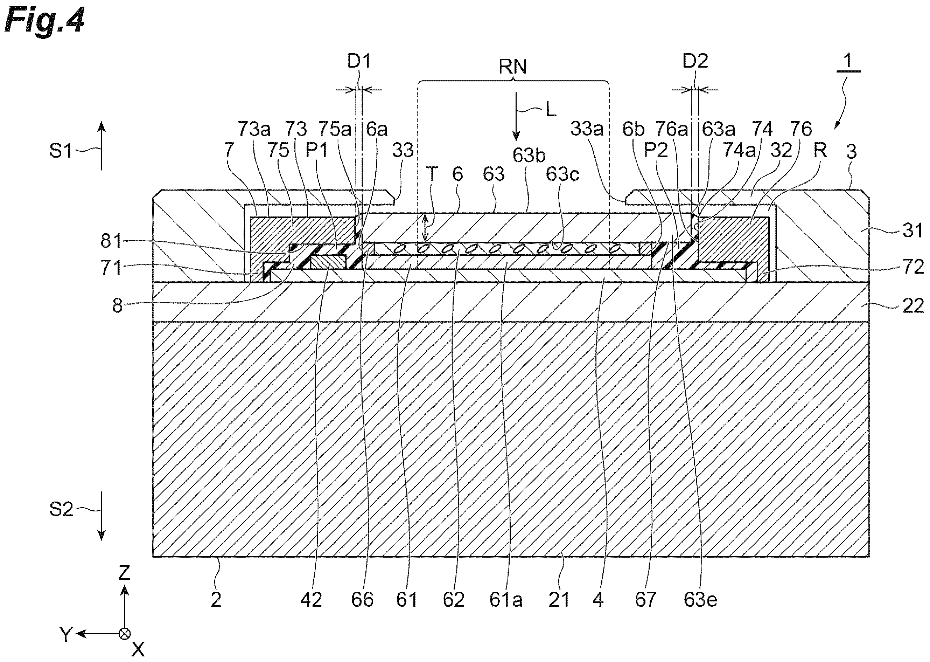

The circuit board 61 is a rectangular plate-shaped CMOS chip formed of, for example, silicon. For example, pixel electrodes are two-dimensionally disposed on the CMOS chip. The circuit board 61 is directly disposed on the first wiring substrate 4, and is disposed on the base wall portion 22 via the first wiring substrate 4. The case where the circuit board 61 is directly disposed on the first wiring substrate 4 includes a case where the circuit board 61 is connected to the first wiring substrate 4 via an adhesive, a tape, or the like. The circuit board 61 is electrically connected to the first wiring substrate 4 by, for example, a wire 12. The circuit board 61 protrudes from the cover member 63 on both sides in a short side direction (X direction) of the cover member 63 with respect to the cover member 63 having a rectangular shape in plan view. The wire 12 is connected to the protruding portion of the circuit board 61. A thickness of the CMOS chip constituting the circuit board 61 may be thinner than a thickness T (FIG. 4) of the cover member 63.

The circuit board 61 has an effective pixel region 61a in the central portion. The effective pixel region 61a is, for example, a rectangular region, and has dimensions of 12.8 mm (X direction) × 16 mm (Y direction) as an example. In the present embodiment, the effective region RN on the surface 63b of the cover member 63 on the first side S1 is defined by the effective pixel region 61a. That is, the effective region RN is a region overlapping the effective pixel region 61a in plan view.

The wire 12 is covered with a protective material 13. The protective material 13 is formed of a resin material different from the filling material 8. The material of the protective material 13 is, for example, a liquid rubber, and may be a rubber or a resin having a higher viscosity than the filling material 8. The protective material 13 may be formed of a curable resin that is not gel-like or putty-like. Since the protective material 13 is provided, the wire 12 can be reliably protected from the filling material 8.

The liquid crystal layer 62 is formed on the circuit board 61 and is disposed on the first side S1 with respect to the circuit board 61. The cover member 63 is formed on the liquid crystal layer 62 so as to cover the entire liquid crystal layer 62, and is disposed on the first side S1 with respect to the liquid crystal layer 62. A thickness of the liquid crystal layer 62 may be thinner than the thickness T of the cover member 63. A sealing resin 66 having a rectangular frame shape in plan view is provided around the liquid crystal layer 62, and the periphery of the liquid crystal layer 62 is sealed by the sealing resin 66. A width of one side of the sealing resin 66 in plan view (width in the direction perpendicular to the side) is, for example, about 1 mm. The sealing resin 66 can be regarded as a part of the liquid crystal layer 62. The sealing resin 66 is formed of, for example, a UV curable resin, and is joined to the circuit board 61 and the cover member 63.

The cover member 63 is formed of, for example, a light transmissive material having transparency to the laser light L in a rectangular plate shape. In this example, the cover member 63 is a sapphire substrate made of sapphire. The cover member 63 functions as a light incident portion in the phase modulation element 6. The cover member 63 also functions as a reference potential in voltage application by the circuit board 61.

A size of the cover member 63 in plan view is, for example, about 18 mm (X direction) × 25 mm (Y direction). A thickness T (length in the Z direction) of the cover member 63 is 0.5 mm or more, for example, 3 mm. That is, the cover member 63 is formed in a rectangular shape in plan view, and has a long side direction and a short side direction. In the present embodiment, the cover member 63 is disposed such that the long side direction is parallel to the Y direction. The thickness T of the cover member 63 may be larger than the thickness of each of the circuit board 61, the liquid crystal layer 62, the first wiring substrate 4, the second wiring substrate 5, and the base wall portion 22.

The electrode layer 67 is formed on the surface 63c of the cover member 63 on the second side S2 (FIGS. 4 and 5(b)). The electrode layer 67 is, for example, a transparent electrode formed of indium tin oxide (ITO). The electrode layer 67 is formed on the entire surface 63c, and is located between the liquid crystal layer 62 and the cover member 63. In this example, the cover member 63 has a protruding portion 63e protruding to one side in the Y direction with respect to the circuit board 61 and the liquid crystal layer 62 in plan view. The electrode layer 67 is also formed on the protruding portion 63e, and the above-described wire 11 is electrically connected to the electrode layer 67 on the protruding portion 63e. A reference voltage is applied to the electrode layer 67 via the wire 11.

The holding portion 7 is formed of, for example, a metal material such as aluminum. By forming the holding portion 7 using a metal material, heat in the phase modulation element 6 can be quickly dissipated to the base portion 2 via the holding portion 7. The holding portion 7 is fixed to the base wall portion 22 of the base portion 2. In the present embodiment, the fixing between the holding portion 7 and the base portion and the fixing between the housing portion 3 and the base portion 2 are performed by, for example, screws. The fixing is not limited to the screw, and may be performed by, for example, an adhesive, a tape, or the like.

The holding portion 7 includes the first side wall portion 71, the second side wall portion 72, and a top wall portion 73. The first side wall portion 71, the second side wall portion 72, and the top wall portion 73 are integrally formed with each other. The first side wall portion 71 and the second side wall portion 72 are formed in, for example, a rectangular plate shape. The first side wall portion 71 and the second side wall portion 72 extend perpendicularly to the Y direction and face each other in the Y direction. The first side wall portion 71 and the second side wall portion 72 are directly disposed on the base wall portion 22. In this example, the first side wall portion 71 and the second side wall portion 72 face each other with the first wiring substrate 4 and the circuit board 61 interposed therebetween. That is, the first wiring substrate 4 and the phase modulation element 6 are disposed between the first side wall portion 71 and the second side wall portion 72 in plan view.

The first side wall portion 71 faces a first side surface 6a of the phase modulation element 6. The first side surface 6a is a side surface of the phase modulation element 6 on one side in the Y direction (left side in FIG. 4), and is configured by the side surfaces of the circuit board 61, the liquid crystal layer 62, and the cover member 63. In this example, the first side wall portion 71 faces the side surface of the circuit board 61. The second side wall portion 72 faces a second side surface 6b of the phase modulation element 6. The second side surface 6b is a side surface opposite to the first side surface 6a of the phase modulation element 6, and is configured by the side surfaces of the circuit board 61, the liquid crystal layer 62, and the cover member 63. In this example, the second side wall portion 72 faces the side surface of the circuit board 61.

The top wall portion 73 is connected to the first side wall portion 71 and the second side wall portion 72, and is formed in a substantially rectangular plate shape. The top wall portion 73 extends perpendicularly to the Z direction and faces the base wall portion 22 and the first wiring substrate 4 in the Z direction. A thickness of at least a part (all in this example) of the top wall portion 73 in the Z direction is thicker than a thickness of the top wall portion 32 (housing top wall portion) in the Z direction.

An opening 74 through which the laser light L incident on the phase modulation element 6 and the laser light L reflected by the phase modulation element 6 pass is formed in the top wall portion 73. The opening 74 has a rectangular shape elongated in the Y direction. The opening 74 overlaps the phase modulation element 6 in plan view. More specifically, a part of the phase modulation element 6 (in this example, the cover member 63) is disposed in the opening 74, and an edge 74a of the opening 74 is located outside the outer edge 63a of the cover member 63 in plan view. That is, the opening 74 is formed in a size that allows the cover member 63 to be disposed inside. In addition, the opening 74 overlaps the entire opening 33 formed in the top wall portion 32 of the housing portion 3 in plan view. That is, the opening 74 is formed to be a size larger than the opening 33, and the edge 74a of the opening 74 is located outside the edge 33a of the opening 33 in plan view. The size of the opening 74 is, for example, 19 mm (X direction) × 26.5 mm (Y direction).

The top wall portion 73 includes a first extending portion 75 extending from the first side wall portion 71 toward the phase modulation element 6 and a second extending portion 76 extending from the second side wall portion 72 toward the phase modulation element 6. The first extending portion 75 and the second extending portion 76 are substantially rectangular flat plate-like portions extending perpendicularly to the Z direction. An end surface 75a of the first extending portion 75 and an end surface 76a of the second extending portion 76 face the phase modulation element 6 in the Y direction. In this example, the end surface 75a faces the side surfaces of the liquid crystal layer 62 and the cover member 63, and the end surface 76a faces the side surfaces of the circuit board 61, the liquid crystal layer 62, and the cover member 63. The end surfaces 75a and 76a are flat surfaces perpendicular to the Y direction, for example.

A distance D1 (shortest distance) between the end surface 75a of the first extending portion 75 and the phase modulation element 6 (the liquid crystal layer 62 and the cover member 63) in the Y direction is smaller than the thickness T of the cover member 63. A distance D2 (shortest distance) between the end surface 76a of the second extending portion 76 and the phase modulation element 6 (the circuit board 61, the liquid crystal layer 62, and the cover member 63) in the Y direction is smaller than the thickness T of the cover member 63. The distances D1 and D2 between the end surfaces 75a and 76a and the phase modulation element 6 are, for example, 5 mm or less, and preferably 3 mm or less.

In this example, the phase modulation element 6 is disposed inside the holding portion 7 such that a part of the cover member 63 on the first side S1 protrudes from the opening 74 to the first side S1. Therefore, the surface 63b of the cover member 63 on the first side S1 is located (protrudes) on the first side S1 with respect to the surface 73a of the top wall portion 73 on the first side S1. The amount of protrusion of the surface 63b of the cover member 63 on the first side S1 from the surface 73a of the top wall portion 73 on the first side S1 in the Z direction is, for example, about 0.1 mm.

As illustrated in FIG. 3, in the X direction, the holding portion 7 is configured to define a first opening 77 facing a third side surface 6c of the phase modulation element 6 and a second opening 78 facing a fourth side surface 6d of the phase modulation element 6. The third side surface 6c is a side surface of the phase modulation element 6 on one side in the X direction (right side in FIG. 3), and is configured by the side surfaces of the circuit board 61, the liquid crystal layer 62, and the cover member 63. The fourth side surface 6d is a side surface opposite to the third side surface 6c of the phase modulation element 6, and is configured by the side surfaces of the circuit board 61, the liquid crystal layer 62, and the cover member 63. In addition, the top wall portion 73 of the holding portion 7 faces the third side surface 6c and the fourth side surface 6d of the phase modulation element 6 in the X direction. As a result, it is possible to suppress the filling material 8 from flowing out to the surface 63b of the cover member 63.

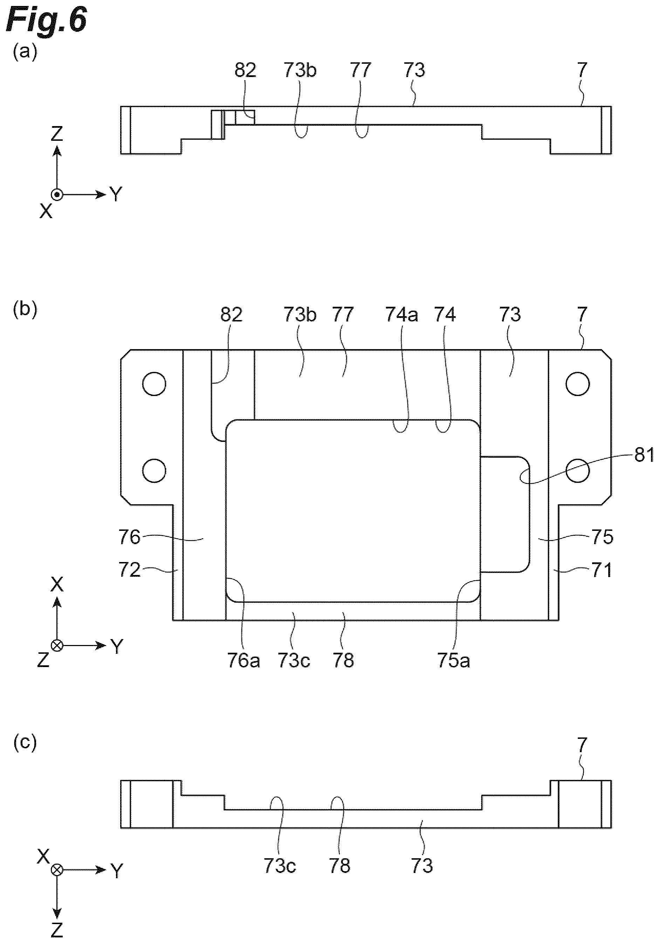

In this example, the holding portion 7 does not have a side wall portion on one side in the X direction, and one side in the X direction is opened. As a result, the first opening 77 is formed on one side in the X direction. A recessed portion 73b is formed in the top wall portion 73 at a portion located on one side in the X direction with respect to the phase modulation element 6 (FIGS. 6(a) and 6(b)). The recessed portion 73b is formed so as to open to the inside and the outside of the holding portion 7. The recessed portion 73b also constitutes the first opening 77. Similarly, the holding portion 7 does not have a side wall portion on the other side in the X direction, and the other side in the X direction is opened. As a result, the second opening 78 is formed on the other side in the X direction. In addition, a recessed portion 73c is formed in the top wall portion 73 at a portion located on the other side in the X direction with respect to the phase modulation element 6 (FIGS. 6(b) and 6(c)). The recessed portion 73c is formed so as to open to the inside and the outside of the holding portion 7. The recessed portion 73c also constitutes the second opening 78.

The wire 12 and the protective material 13 described above are disposed in the first opening 77. That is, the first opening 77 functions as an arrangement space for the wire 12. In this example, the first wiring substrate 4 and the filling material 8 described later are disposed in the first opening 77 and the second opening 78.

In addition, a recessed portion 81 for disposing the above-described temperature monitoring element 42 is formed in the holding portion 7 (FIGS. 4 and 6(b)). In this example, the temperature monitoring element 42 is disposed so as to overlap the first extending portion 75 of the top wall portion 73 in plan view, and the recessed portion 81 is formed in the first extending portion 75. In this example, a part of the temperature monitoring element 42 on the first side S1 is disposed in the recessed portion 81, thereby avoiding interference between the temperature monitoring element 42 and the holding portion 7.

In addition, a recessed portion 82 for disposing the wire 11 described above, that is, the wire 11 for electrically connecting the first wiring substrate 4 and the electrode layer 67 on the surface 63c of the cover member 63 on the second side S2 to each other is formed in the holding portion 7 (FIGS. 6(a) and 6(b)). In this example, since the wire 11 is drawn out from the cover member 63 to one side in the X direction (the right side in FIG. 5), the recessed portion 82 is formed in a portion of the top wall portion 73 on one side in the X direction. The recessed portion 82 is connected to the recessed portion 73b described above. Since a part of the wire 11 is disposed in the recessed portion 82, interference between the wire 11 and the holding portion 7 is avoided.

The filling material 8 is disposed between the phase modulation element 6 and the holding portion 7, and is held by the holding portion 7. As illustrated in FIG. 4, the filling material 8 is disposed in each of a first space P1 formed on one side in the Y direction with respect to the phase modulation element 6 and a second space P2 formed on the other side in the Y direction with respect to the phase modulation element 6. In this example, the first space P1 is formed by the first side surface 6a of the phase modulation element 6, the first side wall portion 71 and the top wall portion 73 (first extending portion 75) of the holding portion 7, the base wall portion 22, and the first wiring substrate 4, and the second space P2 is formed by the second side surface 6b of the phase modulation element 6, the second side wall portion 72 and the top wall portion 73 (second extending portion 76) of the holding portion 7, the base wall portion 22, and the first wiring substrate 4.

The filling material 8 fills the entire first space P1, and connects the first side surface 6a of the phase modulation element 6 and the holding portion 7 to each other in the first space P1. In this example, the filling material 8 connects the first side surface 6a and the first side wall portion 71 to each other in the first space P1. The filling material 8 is in contact with the inner surface (surface on the second side S2) of the first extending portion 75 of the top wall portion 73 in the first space P1. The filling material 8 is disposed between the end surface 75a of the first extending portion 75 and the phase modulation element 6 (cover member 63), and is in contact with the end surface 75a and the side surface of the cover member 63. The filling material 8 is not in contact with the surface 63b of the cover member 63 on the first side S1. The filling material 8 is in contact with the circuit board 61, the liquid crystal layer 62, and the cover member 63 on the first side surface 6a. The filling material 8 is also in contact with the first wiring substrate 4 and the base wall portion 22 in the first space P1. The filling material 8 covers the temperature monitoring element 42 in the first space P1. In the surface 63b of the cover member 63, the filling material 8 may be in contact with the surface 63b as long as it is a region other than the effective region RN (outer peripheral non-effective region).

The filling material 8 fills the entire second space P2, and connects the second side surface 6b of the phase modulation element 6 and the holding portion 7 to each other in the second space P2. In this example, the filling material 8 connects the second side surface 6b and the second side wall portion 72 to each other in the second space P2. The filling material 8 is in contact with the inner surface (surface on the second side S2) of the second extending portion 76 of the top wall portion 73 in the second space P2. The filling material 8 is disposed between the end surface 76a of the second extending portion 76 and the phase modulation element 6 (cover member 63), and is in contact with the end surface 76a and the side surface of the cover member 63. The filling material 8 is in contact with the circuit board 61, the liquid crystal layer 62, and the cover member 63 on the second side surface 6b. The filling material 8 is also in contact with the first wiring substrate 4 and the base wall portion 22 in the second space P2.

As illustrated in FIG. 3, the filling material 8 is also disposed in the first opening 77 and the second opening 78. More specifically, the filling material 8 is disposed in substantially the entire first opening 77 and covers the wire 12 and the protective material 13. The filling material 8 covers a part of the wire 11 disposed in the recessed portion 82 in the first opening 77. The filling material 8 is disposed in the entire second opening 78. As illustrated in FIG. 3, the filling material 8 may reach the outside of the holding portion 7 via the first opening 77 or the second opening 78 in plan view (a part of the filling material 8 may be located outside the holding portion 7).

The filling material 8 is made of a potting material having a high viscosity. The filling material 8 is formed of, for example, a resin material such as silicone. The filling material 8 may be, for example, a non-silicone-based resin material, a silver paste, a heat dissipation adhesive, a liquid rubber, or the like. A thermal conductivity of the filling material 8 is 0.5 W/(m·K) or more, for example, about 5.0 W/(m·K). The filling material 8 is gel-like or clay-like (putty-like) and is not cured. The filling material 8 has a flow rate of, for example, 10 g/min or more and 60 g/min or less. This flow rate is a measurement value of how many grams of flow rate per minute are obtained when a sample is extruded at a pressure of 0.6 MPa using a syringe having a diameter of 2.54 mm and a capacity of 30cc, and the smaller the flow rate, the higher the viscosity. The filling material 8 has, for example, a viscosity of 100 to 15000 Pa·s.

### [Actions and Effects]

In the phase modulation module 1, the arrangement space (the first space P1 and the second space P2) of the filling material 8 can be restricted by the holding portion 7 having the top wall portion 73 in addition to the first side wall portion 71 and the second side wall portion 72, and the amount of the filling material 8 can be reduced. In addition, since the top wall portion 73 includes the first extending portion 75 extending from the first side wall portion 71 toward the phase modulation element 6 and the second extending portion 76 extending from the second side wall portion 72 toward the phase modulation element 6, and the end surface 75a of the first extending portion 75 and the end surface 76a of the second extending portion 76 face the phase modulation element 6, it is possible to effectively restrict the arrangement space of the filling material 8. The filling material 8 is disposed in each of the first space P1 and the second space P2, and connects the phase modulation element 6 and the holding portion 7 to each other in the first space P1 and connects the phase modulation element 6 and the holding portion 7 to each other in the second space P2. As a result, heat generated in the phase modulation element 6 can be efficiently transferred to the holding portion 7 via a small amount of the filling material 8, and the heat can be efficiently dissipated to the base portion 2 via the holding portion 7. That is, while the thermal conductivity of the filling material 8 is, for example, about 3 to 5 W/(m·K), aluminum constituting the holding portion 7 has a thermal conductivity as high as 237 W/(m·K), which is about 50 to 100 times higher. Therefore, heat dissipation efficiency can be improved by reducing the amount of the filling material 8. In addition, since heat is transferred to the holding portion 7 on the first side surface 6a side and the second side surface 6b side of the phase modulation element 6, the heat can be efficiently dissipated in a well-balanced manner. On the other hand, when the arrangement space of the filling material 8 is restricted by the holding portion 7, the filling material 8 easily flows out to the effective region RN on the surface 63b of the phase modulation element 6 (cover member 63) on the first side S1 depending on the application amount of the filling material 8, and there is a possibility that it becomes difficult to control the filling material 8. In this regard, in the phase modulation module 1, the end surface 75a of the first extending portion 75 and the end surface 76a of the second extending portion 76 of the top wall portion 73 face the phase modulation element 6. As a result, the filling material 8 can be suppressed from flowing out to the surface 63b of the cover member 63, and it is possible to facilitate the control of the filling material 8 (it is possible to widen an allowable range for the application amount of the filling material 8). Therefore, according to the phase modulation module 1, the filling material 8 can be easily controlled, and heat dissipation can be improved.

Further, in the present embodiment, since the first space P1 and the second space P2 are formed between the phase modulation element 6 and the holding portion 7, for example, even when the holding portion 7 expands with a temperature change, it is possible to suppress the stress due to the expansion from being transferred to the phase modulation element 6. In addition, when the filling material 8 is disposed in the first space P1 and the second space P2, the stress can be absorbed by the filling material 8, and the stress transferred to the phase modulation element 6 can be reduced.

The surface 63b of the cover member 63 on the first side S1 is located on the first side S1 with respect to the surface 73a of the top wall portion 73 on the first side S1. As a result, it is possible to further suppress the filling material 8 from flowing out to the surface 63b of the cover member 63. In addition, even when the filling material 8 flows out to the surface 63b of the cover member 63, the filling material 8 can be easily wiped with, for example, a wiper or the like.

The base portion 2 includes a heat sink 21. Accordingly, heat dissipation of the base portion 2 can be enhanced.

The cover member 63 is formed of sapphire, and the filling material 8 is in contact with the cover member 63 on the first side surface 6a and the second side surface 6b. As a result, a thermal conductivity of the cover member 63 can be increased, and the heat generated in the vicinity of the center of the liquid crystal layer 62 can be efficiently transferred to the peripheral edge portion of the cover member 63. Then, the heat transferred to the peripheral edge portion of the cover member 63 can be efficiently dissipated from the first side surface 6a and the second side surface 6b.

The holding portion 7 is configured to define a first opening 77 facing a third side surface 6c different from the first side surface 6a and the second side surface 6b in the phase modulation element 6. As a result, even when the application amount of the filling material 8 increases, the filling material 8 can be released to the first opening 77, and the filling material 8 can be reliably suppressed from flowing out to the surface 63b of the cover member 63.

The holding portion 7 is configured to define the second opening 78 facing the fourth side surface 6d opposite to the third side surface 6c of the phase modulation element 6. As a result, even when the application amount of the filling material 8 increases, the filling material 8 can be released to the second opening 78, and the filling material 8 can be more reliably suppressed from flowing out to the surface of the cover member 63.

The circuit board 61 is disposed on the base portion 2 via the first wiring substrate 4. As a result, for example, a fixing strength of the phase modulation element 6 can be increased as compared with a case where the circuit board 61 is directly disposed on the base portion 2.

The circuit board 61 and the first wiring substrate 4 are electrically connected to each other by the wire 12 disposed in the first opening 77, and the wire 12 is covered with a protective material 13 formed of a material different from the filling material 8. As a result, even when the application amount of the filling material 8 increases, the filling material 8 can be released to the first opening 77, and the filling material 8 can be suppressed from flowing out to the surface 63b of the cover member 63. In addition, a space for disposing the wire 12 can be secured by the first opening 77. Since the wire 12 is covered with the protective material 13, the wire 12 can be protected even when the filling material 8 flows into the first opening 77.

The filling material 8 connects the first side surface 6a of the phase modulation element 6 and the first side wall portion 71 of the holding portion 7 to each other in the first space P1, and connects the second side surface 6b of the phase modulation element 6 and the second side wall portion 72 of the holding portion 7 to each other in the second space P2. As a result, the heat generated in the phase modulation element 6 can be efficiently transferred to the holding portion 7.

The distance between the end surface 75a of the first extending portion 75 and the phase modulation element 6 and the distance between the end surface 76a of the second extending portion 76 and the phase modulation element 6 are smaller than the thickness of the cover member 63. As a result, it is possible to reliably suppress the filling material 8 from flowing out to the surface 63b of the cover member 63.

The filling material 8 is in contact with the top wall portion 73. As a result, the heat generated in the phase modulation element 6 can be efficiently transferred to the holding portion 7. In addition, when an impact or the like acts on the top wall portion 73, the filling material 8 functions as a cushion, such that the impact can be alleviated.

The filling material 8 is disposed between the end surface 75a of the first extending portion 75 and the phase modulation element 6 and between the end surface 76a of the second extending portion 76 and the phase modulation element 6. As a result, the heat generated in the phase modulation element 6 can be efficiently transferred to the holding portion 7.

The first side wall portion 71, the second side wall portion 72, and the top wall portion 73 are integrally formed. Thus, handling of the holding portion 7 can be facilitated. In addition, a strength of the holding portion 7 can be secured.

The phase modulation module 1 includes a housing portion 3 that has a side wall portion 31 (housing side wall portion) surrounding the phase modulation element 6 and the holding portion 7 in plan view, and the top wall portion 32 (housing top wall portion) connected to the side wall portion 31, and is disposed on the base portion 2 to accommodate the phase modulation element 6 and the holding portion 7. The opening 33 (housing opening) overlapping a part of the phase modulation element 6 in plan view is formed in the top wall portion 32. As a result, it is possible to suppress foreign matter or stray light from entering an arrangement portion of the phase modulation element 6 and the holding portion 7.

In plan view, the edge 33a of the opening 33 is located inside the outer edge 63a of the cover member 63. As a result, it is possible to effectively suppress stray light from entering the housing portion 3 from the opening 33.

The phase modulation module 1 includes the temperature monitoring element 42 for monitoring the temperature of the phase modulation element 6 disposed on the first wiring substrate 4. The temperature monitoring element 42 is disposed so as to overlap the top wall portion 73 in plan view, and the recessed portion 81 in which the temperature monitoring element 42 is disposed is formed in the top wall portion 73. As a result, the temperature monitoring element 42 can be disposed near the phase modulation element 6 while protecting the phase modulation element 6 with the filling material 8.

The electrode layer 67 is formed on the surface 63c of the cover member 63 on the second side S2. The cover member 63 has the protruding portion 63e protruding from the circuit board 61 in plan view, and the electrode layer 67 on the protruding portion 63e and the first wiring substrate 4 are electrically connected to each other by the wire 11. Thus, the wire 11 can be stably connected to the electrode layer 67.

The recessed portion 82 in which the wire 11 is disposed is formed in the top wall portion 73. Thus, the wire 11 can be suitably disposed while restricting the arrangement space of the filling material 8 by the holding portion 7.

The connection member 41 having a predetermined height in the Z direction is disposed on the first wiring substrate 4. An electrode pad 41a electrically connected to the first wiring substrate 4 is formed on the connection member 41. The wire 11 is electrically connected to the electrode pad 41a. Consequently, the wire 11 is electrically connected to the electrode pad 41a on the connection member 41 having the predetermined height, such that the wire 11 can be suppressed from being excessively curved in the Z direction, and a load applied to the wire 11 can be reduced.

### [Modifications]

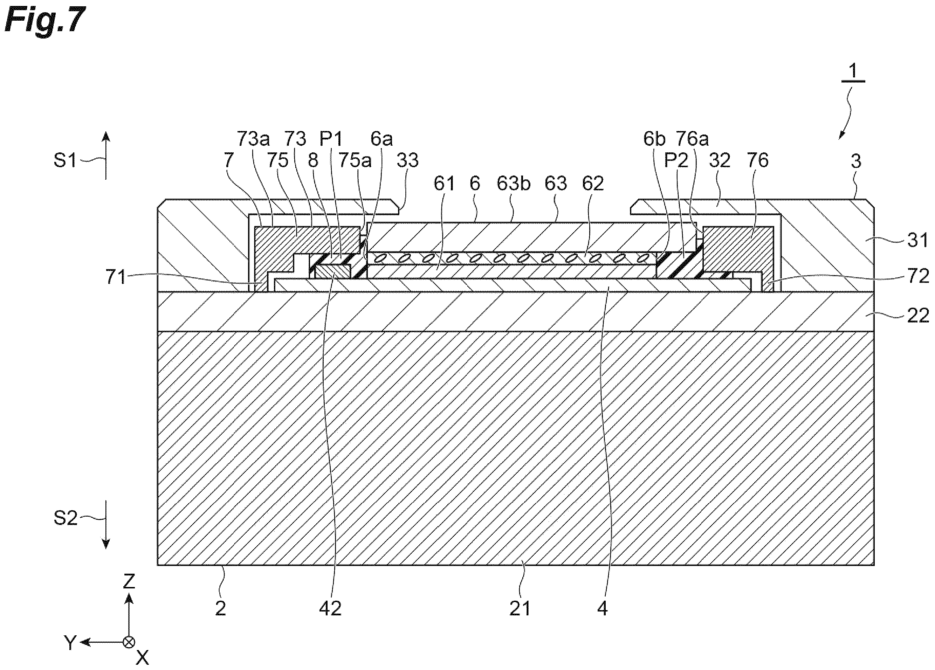

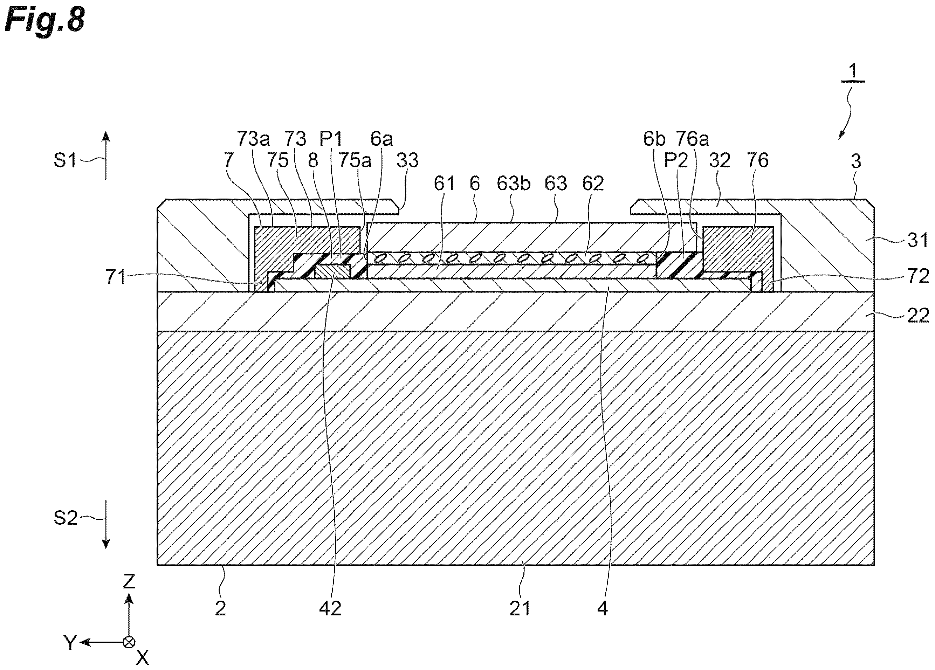

As in a first modification illustrated in FIG. 7, the filling material 8 may be in contact with only the top wall portion 73 without being in contact with the first side wall portion 71 and the second side wall portion 72. In the first modification, the filling material 8 connects the first side surface 6a of the phase modulation element 6 and the top wall portion 73 of the holding portion 7 to each other in the first space P1, and connects the second side surface 6b of the phase modulation element 6 and the top wall portion 73 of the holding portion 7 to each other in the second space P2. Also in the first modification, similarly to the above embodiment, the filling material 8 can be easily controlled, and the heat dissipation can be improved. In the first modification, there are portions where the filling material 8 is not disposed between the first side surface 6a and the first side wall portion 71 (first space P1) and between the second side surface 6b and the second side wall portion 72 (second space P2). By securing a large arrangement space of the filling material 8 with respect to the amount of the filling material 8 in this manner (by providing a margin in the arrangement space), it is possible to further suppress the filling material 8 from flowing out to the surface 63b of the cover member 63. As described above, the filling material 8 does not have to be disposed in the entire first space P1 or second space P2, and may be disposed only in a part of the first space P1 or the second space P2. In FIG. 7, the sealing resin 66 of the liquid crystal layer 62 is not illustrated. The same applies to FIGS. 8 to 11.

As in a second modification illustrated in FIG. 8, the filling material 8 does not have to be disposed between the end surface 75a of the first extending portion 75 and the side surface of the cover member 63 and between the end surface 76a of the second extending portion 76 and the side surface of the cover member 63. That is, it is sufficient that the filling material 8 is disposed in a portion of the first space P1 that is formed by the first side surface 6a of the phase modulation element 6, the inner surface of the first side wall portion 71 of the holding portion 7 (surface on the second side wall portion 72 side), and the inner surface of the top wall portion 73 (surface on the second side S2). Similarly, it is sufficient that the filling material 8 is disposed in a portion of the second space P2 that is formed by the second side surface 6b of the phase modulation element 6, the inner surface of the second side wall portion 72 of the holding portion 7 (surface on the first side wall portion 71 side), and the inner surface of the top wall portion 73 (surface on the second side S2). Also in the second modification, similarly to the above embodiment, the filling material 8 can be easily controlled, and the heat dissipation can be improved.

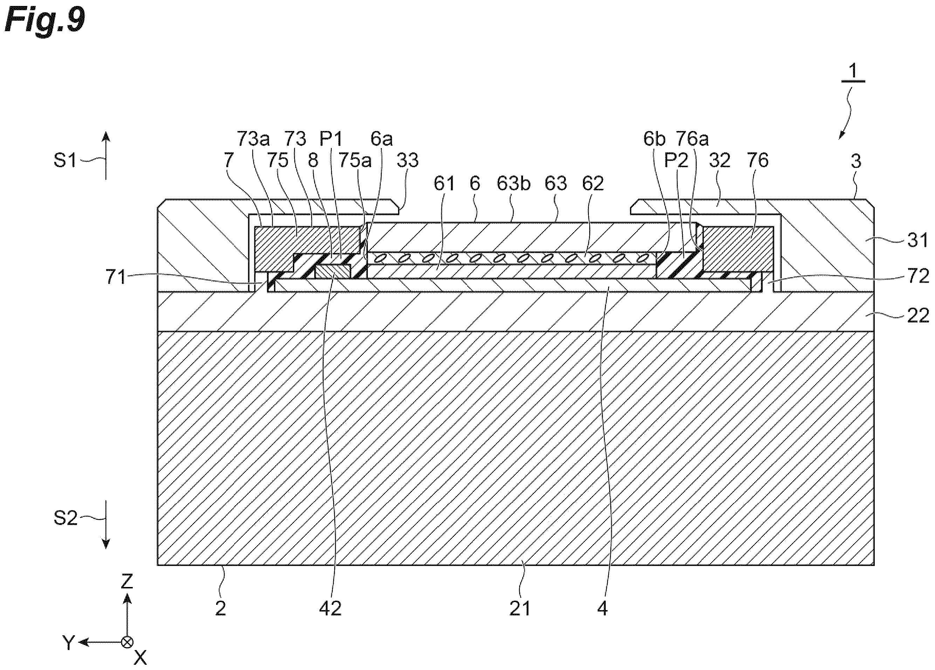

As in a third modification illustrated in FIG. 9, the first side wall portion 71 and the second side wall portion 72 may be integrally formed with the base wall portion 22. That is, the first side wall portion 71, the second side wall portion 72, and the top wall portion 73 may constitute one member integrally formed with each other as in the above-described embodiment, or may be configured by portions separately formed as in the third modification. Also in the third modification, similarly to the above embodiment, the filling material 8 can be easily controlled, and the heat dissipation can be improved.

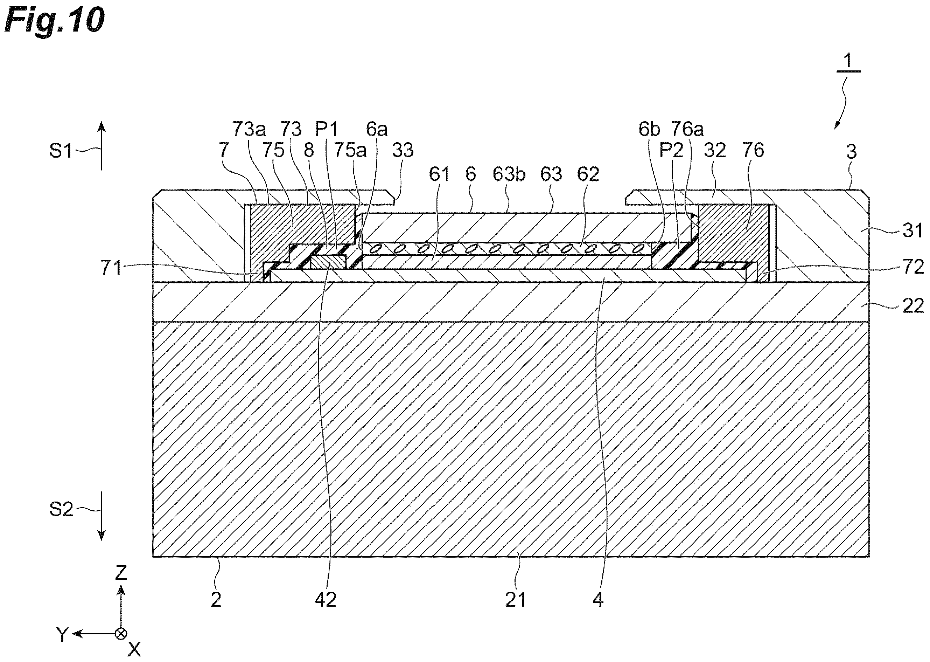

As in a fourth modification illustrated in FIG. 10, the holding portion 7 may be in contact with the inner surface of the housing portion 3. In the fourth modification, the surface 73a of the top wall portion 73 on the first side S1 is in contact with the inner surface (surface on the second side S2) of the top wall portion 32. Also in the fourth modification, similarly to the above embodiment, the filling material 8 can be easily controlled, and the heat dissipation can be improved. In addition, since the holding portion 7 is in contact with the inner surface of the housing portion 3, the heat transferred from the phase modulation element 6 to the holding portion 7 can be dissipated to the housing portion 3, and the heat dissipation can be further improved. Note that the holding portion 7 may be in contact with the inner surface of the side wall portion 31 instead of or in addition to the inner surface of the top wall portion 32. Note that, although the top wall portion 73 is in direct contact with the top wall portion 32 in this example, a non-thermally insulating element may be interposed between the top wall portion 73 and the top wall portion 32, and the top wall portion 73 may be in contact with the top wall portion 32 via the non-thermally insulating element. Examples of the non-thermally insulating element include a heat dissipation sheet and an adhesive.

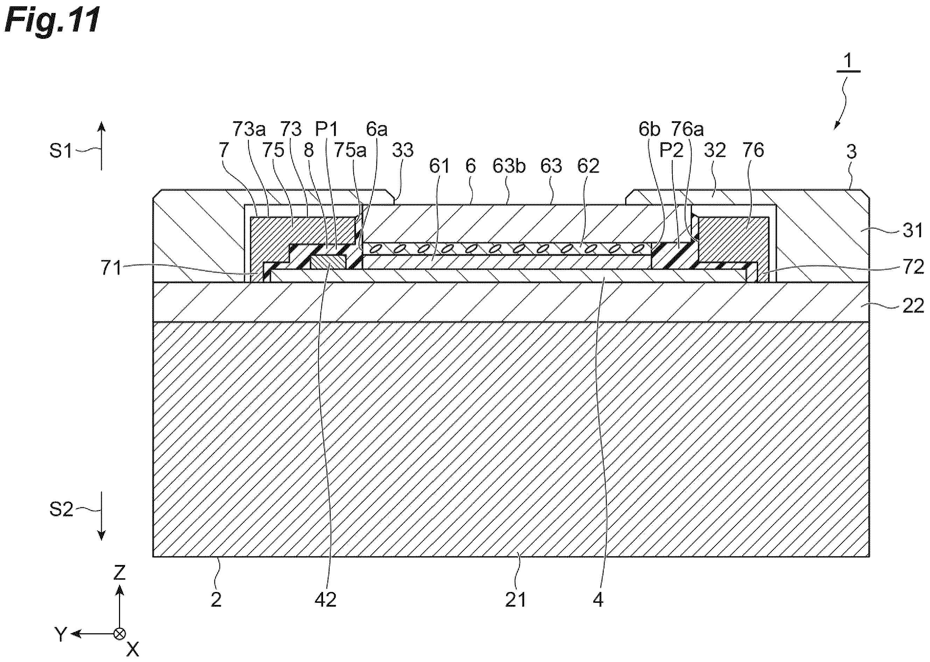

As in a fifth modification illustrated in FIG. 11, the surface 63b of the cover member 63 on the first side S1 may be in contact with the inner surface of the top wall portion 32. Also in the fourth modification, similarly to the above embodiment, the filling material 8 can be easily controlled, and the heat dissipation can be improved. In addition, since the cover member 63 is in contact with the top wall portion 32, the heat generated in the phase modulation element 6 can be dissipated to the housing portion 3 via the cover member 63. Note that, although the cover member 63 is in direct contact with the top wall portion 32 in this example, a non-thermally insulating element may be interposed between the cover member 63 and the top wall portion 32, and the cover member 63 may be in contact with the top wall portion 32 via the non-thermally insulating element. Examples of the non-thermally insulating element include a heat dissipation sheet and an adhesive.

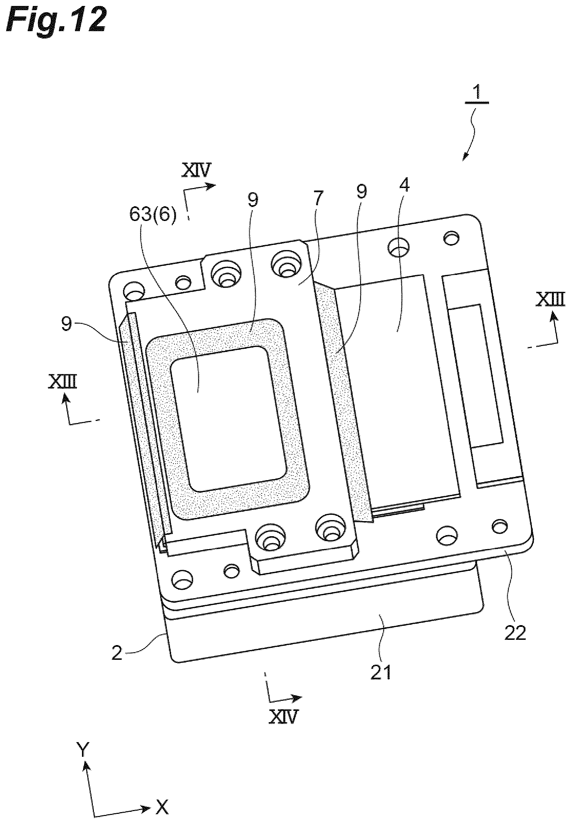

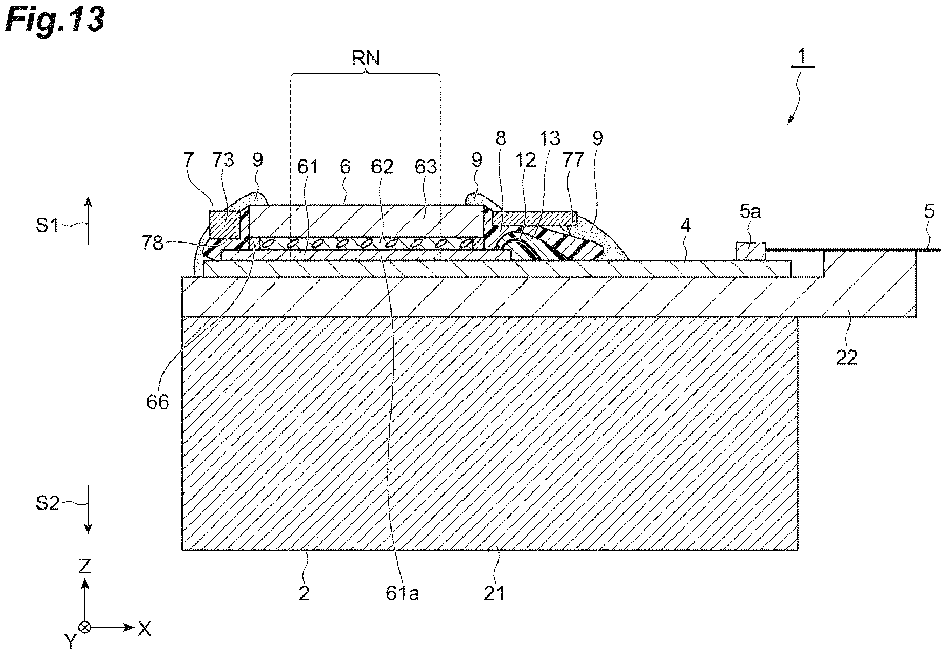

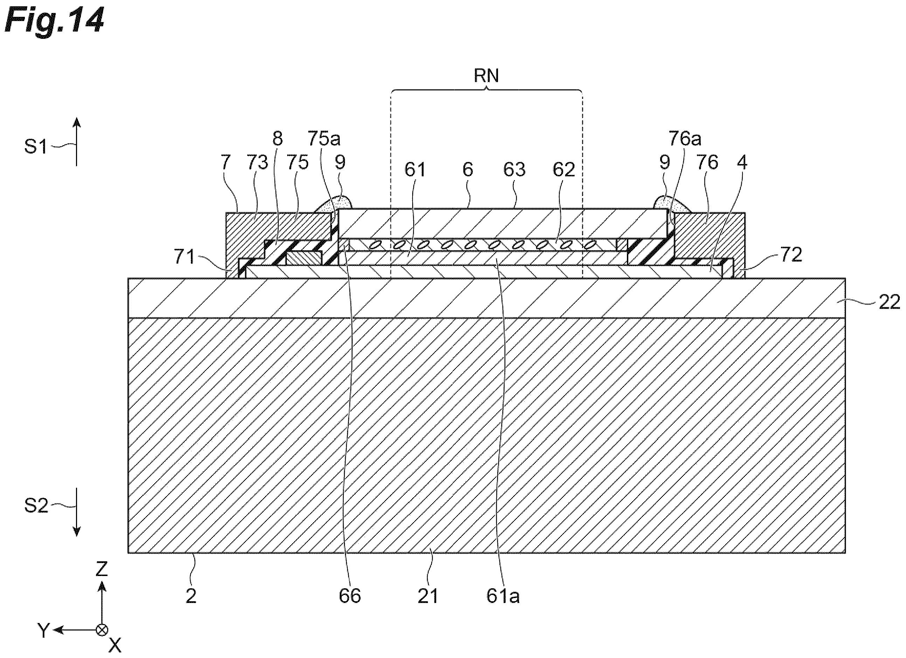

In the fifth modification illustrated in FIGS. 12, 13, and 14, the phase modulation module 1 does not include the housing portion 3 but includes a covering member 9. The covering member 9 is provided on an exposed portion of the filling material 8 that is exposed from the holding portion 7 so as to cover the exposed portion. The covering member 9 is formed of, for example, a thermosetting resin, an ultraviolet curable resin, a tape, or a metal material. The covering member 9 covers the exposed portions of the filling material 8 between the end surface 75a of the first extending portion 75 and the cover member 63 and between the end surface 76a of the second extending portion 76 and the cover member 63. The covering member 9 covers the exposed portions of the filling material 8 in the first opening 77 and the second opening 78. Also in the fifth modification, similarly to the above embodiment, the filling material 8 can be easily controlled, and the heat dissipation can be improved. In addition, since the covering member 9 covers the exposed portion of the filling material 8 that is exposed from the holding portion 7, bleeding and generation of particles on the surface of the filling material 8 can be suppressed. In the fifth modification, the phase modulation module 1 may include the housing portion 3. As illustrated in FIGS. 12 to 14, in the fifth modification, the covering member 9 reaches the surface 63b of the cover member 63 on the second side S2, but does not reach the effective region RN. In this manner, it is sufficient that the covering member 9 does not reach the effective region RN.

The present disclosure is not limited to the above embodiment and modifications. For example, the material and shape of each configuration are not limited to the material and shape described above, and various materials and shapes can be adopted.

For example, the cover member 63 may be a diamond substrate formed of diamond. Also in this case, the thermal conductivity of the cover member 63 can be increased. The cover member 63 may be formed of a material (for example, quartz) other than sapphire and diamond. The first wiring substrate 4 is not limited to the ceramic substrate, and may be, for example, a flexible circuit board. The first wiring substrate 4 may be omitted. In this case, the circuit board 61 (phase modulation element 6) may be directly disposed on the base wall portion 22. The first wiring substrate 4 may be disposed outside the first side wall portion 71 and the second side wall portion 72 in plan view.

The base portion 2 does not necessarily have to include the heat sink 21, and may be configured only by the base wall portion 22, for example. The surface 63b of the cover member 63 on the first side S1 may be located on the second side S2 with respect to the surface 73a of the top wall portion 73 on the first side S1, or may be located on the same plane as the surface 73a of the top wall portion 73. The filling material 8 does not have to be in contact with the cover member 63, and may be in contact with only the circuit board 61 and the liquid crystal layer 62, for example. The filling material 8 does not have to be in contact with the top wall portion 73, and may be in contact with only the first side wall portion 71 and the second side wall portion 72, for example. The filling material 8 does not have to be in contact with the first side surface 6a and the second side surface 6b of the phase modulation element 6, and may be in contact with the phase modulation element 6 only on the surface 63c of the cover member 63 on the second side S2, for example. Alternatively, the filling material 8 may be in contact with the phase modulation element 6 only on the surface of the circuit board 61 on the first side S1. The holding portion 7 does not have to include at least one of the first opening 77 and the second opening 78, and may further have, for example, a side wall portion facing the third side surface 6c of the phase modulation element 6 and a side wall portion facing the fourth side surface 6d of the phase modulation element 6. That is, the holding portion 7 may have a side wall portion formed in a frame shape so as to surround the phase modulation element 6.

The distance D1 between the end surface 75a of the first extending portion 75 and the phase modulation element 6 and the distance D2 between the end surface 76a of the second extending portion 76 and the phase modulation element 6 may be equal to or more than the thickness T of the cover member 63. The housing portion 3 may be omitted. The edge 33a of the opening 33 formed in the top wall portion 32 of the housing portion 3 may coincide with the outer edge 63a of the cover member 63 in plan view, or may be located outside the outer edge 63a. The temperature monitoring element 42 may be omitted. At least one of the recessed portions 81 and 82 may be omitted. The cover member 63 does not have to include the protruding portion 63e protruding from the circuit board 61 in plan view. The connection member 41 may be omitted.

In the above embodiment, the opening 74 which is a hole is formed in the top wall portion 73, and the entire periphery of the opening 74 is surrounded by the top wall portion 73, but the opening 74 formed in the top wall portion 73 may be a notch. For example, the top wall portion 73 may be formed in a substantially U-shape (U-shape) in plan view, and the opening 74 may be opened laterally at one side portion (for example, a side portion on one side in the X direction) of the top wall portion 73. It is sufficient that at least a part of the end surface 75a of the first extending portion 75 faces the phase modulation element 6, and only a part of the end surface 75a may face the phase modulation element 6. It is sufficient that at least a part of the end surface 76a of the second extending portion 76 faces the phase modulation element 6, and only a part of the end surface 76a may face the phase modulation element 6. The end surfaces 75a and 76a may be, for example, inclined surfaces inclined with respect to the Z direction. A part of the end surface 75a of the first extending portion 75 or a part of the end surface 76a of the second extending portion 76 may be in contact with the phase modulation element 6. That is, a part of the top wall portion 73 may be in contact with the phase modulation element 6. In this case, the heat generated in the phase modulation element 6 can be efficiently dissipated to the holding portion 7.

### Reference Signs List

1: Phase modulation module, 2: Base portion, 21: Heat sink, 3: Housing portion, 31: Side wall portion (housing side wall portion), 32: Top wall portion (housing top wall portion), 33: Opening (housing opening), 33a: Edge, 4: First wiring substrate, 41: Connection member, 41a: Electrode pad, 42: Temperature monitoring element, 6: Phase modulation element, 6a: First side surface, 6b: Second side surface, 6c: Third side surface, 6d: Fourth side surface, 61: Circuit board, 62: Liquid crystal layer, 63: Cover member, 63a: Outer edge, 63b: Surface on first side, 63c: Surface on second side, 63e: Protruding portion, 67: Electrode layer, 7: Holding portion, 71: First side wall portion, 72: Second side wall portion, 73: Top wall portion, 73a: Surface on first side, 74: Opening, 74a: Edge, 75: First extending portion, 75a: End surface, 76: Second extending portion, 76a: End surface, 77: First opening, 78: Second opening, 81, 82: Recessed portion, 8: Filling material, 9: Covering member, 11, 12: Wire, P1: First space, P2: Second space, S1: First side, S2: Second side

## Claims

1. A phase modulation module comprising:
a base portion;
a reflection-type phase modulation element disposed on the base portion;
a holding portion disposed on the base portion, the holding portion including a first side wall portion facing a first side surface of the phase modulation element, a second side wall portion facing a second side surface opposite to the first side surface of the phase modulation element, and a top wall portion connected to the first side wall portion and the second side wall portion, the top wall portion having an opening that overlaps at least a part of the phase modulation element when viewed from a predetermined direction; and
a filling material disposed between the phase modulation element and the holding portion, wherein
when a side on which the phase modulation element is located with respect to the base portion in the predetermined direction is defined as a first side and a side opposite to the first side is defined as a second side, the phase modulation element includes:
a circuit board disposed on the base portion,
a liquid crystal layer disposed on the first side with respect to the circuit board, and
a cover member formed of a light transmissive material in a plate shape and disposed on the first side with respect to the liquid crystal layer,
the top wall portion includes a first extending portion extending from the first side wall portion toward the phase modulation element and a second extending portion extending from the second side wall portion toward the phase modulation element, and an end surface of the first extending portion and an end surface of the second extending portion face the phase modulation element, and
the filling material is disposed in each of a first space formed by the first side surface of the phase modulation element and the first side wall portion and the top wall portion of the holding portion, and a second space formed by the second side surface of the phase modulation element and the second side wall portion and the top wall portion of the holding portion, and connects the phase modulation element and the holding portion to each other in the first space and connects the phase modulation element and the holding portion to each other in the second space.

2. The phase modulation module according to claim 1, wherein a surface of the cover member on the first side is located on the first side with respect to a surface of the top wall portion on the first side.

3. The phase modulation module according to claim 1 or 2, wherein the base portion includes a heat sink.

4. The phase modulation module according to any one of claims 1 to 3, wherein
the cover member is formed of sapphire or diamond, and
the filling material is in contact with the cover member on the first side surface and the second side surface.

5. The phase modulation module according to any one of claims 1 to 4, wherein the holding portion is configured to define a first opening facing a third side surface different from the first side surface and the second side surface in the phase modulation element.

6. The phase modulation module according to claim 5, wherein the holding portion is configured to define a second opening facing a fourth side surface opposite to the third side surface of the phase modulation element.

7. The phase modulation module according to any one of claims 1 to 6, further comprising:
a wiring substrate disposed on the base portion such that at least a part of the wiring substrate is located between the first side wall portion and the second side wall portion when viewed from the predetermined direction, wherein
the circuit board is disposed on the base portion via the wiring substrate.

8. The phase modulation module according to any one of claims 1 to 7, further comprising:
a wiring substrate disposed on the base portion such that at least a part of the wiring substrate is located between the first side wall portion and the second side wall portion when viewed from the predetermined direction, wherein
the holding portion is configured to define a first opening facing a third side surface different from the first side surface and the second side surface in the phase modulation element, and
the circuit board and the wiring substrate are electrically connected to each other by a wire disposed in the first opening.

9. The phase modulation module according to any one of claims 1 to 8, wherein the filling material connects the first side surface of the phase modulation element and the first side wall portion of the holding portion to each other in the first space, and connects the second side surface of the phase modulation element and the second side wall portion of the holding portion to each other in the second space.

10. The phase modulation module according to any one of claims 1 to 9, wherein a distance between the end surface of the first extending portion and the phase modulation element and a distance between the end surface of the second extending portion and the phase modulation element are smaller than a thickness of the cover member.

11. The phase modulation module according to claim 1 or 2, wherein the filling material is in contact with the top wall portion.

12. The phase modulation module according to any one of claims 1 to 11, wherein the filling material is disposed between the end surface of the first extending portion and the phase modulation element and between the end surface of the second extending portion and the phase modulation element.

13. The phase modulation module according to any one of claims 1 to 12, wherein the first side wall portion, the second side wall portion, and the top wall portion are integrally formed.

14. The phase modulation module according to any one of claims 1 to 13, further comprising:
a housing portion that includes a housing side wall portion surrounding the phase modulation element and the holding portion when viewed from the predetermined direction, and a housing top wall portion connected to the housing side wall portion, the housing portion being disposed on the base portion and accommodating the phase modulation element and the holding portion, wherein
a housing opening that overlaps at least a part of the phase modulation element when viewed from the predetermined direction is formed in the housing top wall portion.

15. The phase modulation module according to claim 14, wherein an edge of the housing opening is located inside an outer edge of the cover member when viewed from the predetermined direction.

16. The phase modulation module according to claim 14 or 15, wherein the holding portion is in contact with an inner surface of the housing portion.

17. The phase modulation module according to any one of claims 14 to 16, wherein a surface of the cover member on the first side is in contact with the housing top wall portion.

18. The phase modulation module according to any one of claims 1 to 17, further comprising a covering member provided on an exposed portion of the filling material that is exposed from the holding portion so as to cover the exposed portion.

19. The phase modulation module according to any one of claims 1 to 18, further comprising:
a wiring substrate disposed on the base portion such that at least a part of the wiring substrate is located between the first side wall portion and the second side wall portion when viewed from the predetermined direction; and
a temperature monitoring element disposed on the wiring substrate and configured to monitor a temperature of the phase modulation element, wherein
the temperature monitoring element is disposed so as to overlap the first side wall portion, the second side wall portion, or the top wall portion when viewed from the predetermined direction, and
a recessed portion in which the temperature monitoring element is disposed is formed in the first side wall portion, the second side wall portion, or the top wall portion.

20. The phase modulation module according to any one of claims 1 to 19, further comprising:
a wiring substrate disposed on the base portion such that at least a part of the wiring substrate is located between the first side wall portion and the second side wall portion when viewed from the predetermined direction, wherein
an electrode layer is formed on a surface of the cover member on the second side,
the cover member has a protruding portion protruding from the circuit board when viewed from a Z direction, and
the electrode layer on the protruding portion and the wiring substrate are electrically connected to each other by a wire.

21. The phase modulation module according to claim 20, wherein a recessed portion in which the wire is disposed is formed in the first side wall portion, the second side wall portion, or the top wall portion.

22. The phase modulation module according to claim 20 or 21, wherein
a connection member having a predetermined height in the predetermined direction is disposed on the wiring substrate,
an electrode pad electrically connected to the wiring substrate is formed on the connection member, and
the wire is electrically connected to the electrode pad.
